# EUROPÄISCHE PATENTSCHRIFT

(11) **EP 0 860 799 B1**
(45) Veröffentlichungstag und Bekanntmachung des Hinweises auf die Patenterteilung: **29.09.2004**
(21) Anmeldenummer: 98250007.6
(22) Anmeldetag: 10.01.1998
(51) Int. Cl.: G07B 17/00, F16P 3/12

(54) **Schutzvorrichtung für eine Frankiermaschine**
Protection device for a franking machine
Dispositif de protection pour une machine à affranchir

(30) Priorität: 19.02.1997 DE 19706376
(43) Veröffentlichungstag der Anmeldung: 26.08.1998
(73) Patentinhaber: Francotyp-Postalia AG & Co. KG, 16547 Birkenwerder (DE)
(72) Erfinder: Müller, Dietrich, 10715 Berlin (DE)

(56) Entgegenhaltungen:
- DE-A- 3 312 657
- FR-A- 2 519 733
- US-A- 5 256 835
- US-A- 5 486 973

## Beschreibung

Die Erfindung betrifft eine Frankiermaschine mit einem Brieftransportlaufwerk und einer Schutzvorrichtung, insbesondere zum Schutz der Bedienperson bei Eingriff in das Brieftransportlaufwerk.

Bisher erfolgt der Druck in Frankiermaschinen hauptsächlich mittels Farbwalzen oder Thermodruckköpfen. Der einzelne Brief wird dabei waagerecht auf einem Transportband liegend bis zum Druckwerk transportiert. Dabei liegt die maximale Schlitzbreite zwischen Druckwerk und Transportband bei 8 mm, so daß die Bedienperson sich nicht die Finger einklemmen kann, siehe DE 38 16 548 C2, DE 41 14 963 C2 und DE 42 28 765 A1.
Neuerdings ist man bemüht, die Vorteile des Tintendrucks auch bei der Frankiertechnik zu nutzen. Der Druck erfolgt hierbei berührungslos mittels Tintendruckköpfen, siehe DE 44 24 771 C1 und DE 94 20 734 U1.

In diesem Zusammenhang wurde eine Frankiermaschine vorgeschlagen, siehe DE 19 605 014 und DE 19 605 015, bei der die Briefe hochkant, leicht nach hinten geneigt, mit Hilfe eines umlaufenden Transportbandes befördert werden. Die Briefe liegen dabei an einer Führungsplatte an, in der ein Druckfenster vorgesehen und in dem der Tintendruckkopf fest installiert ist. Auf dem Transportband sind Andruckelemente befestigt, die die Briefe gegen die Führungsplatte drücken und mittels Reibung mitnehmen.
Bis auf einen Führungsspalt für die Briefe ist der Transportbereich so abgedeckt, daß ein die Bedienperson gefährdender Eingriff von oben her verhindert wird.
Im seitlichen Auslaufbereich für die Briefe ist ein Eingriff - obwohl laut Bedienvorschrift nicht gestattet - aber möglich, da der Führungsspalt eine Breite bis zu 20 mm aufweisen kann. Bei in Betrieb befindlichem Transportband kann ein von dieser Seite in den Führungsspalt gesteckter Finger zwischen einem Andruckelement und der seitlichen Abdeckung des Transportbandes eingeklemmt und entsprechend der Antriebskraft gequetscht werden. Die Antriebskraft ist so bemessen, daß auch noch Briefe mit einer Masse von 2000 g sicher transportiert werden. Die Klemmkraft in Transportrichtung ist dann entsprechend groß. Ein Rutschen des Antriebs ist ausgeschlossen, da ein Zahnriemenantrieb verwendet wird.
Sicherheitsmaßnahmen sind demzufolge erforderlich.

Andererseits ist eine Vorrichtung zum Drucken von Markierungen auf flachen Sendungen mit einer oder mehreren Druckstationen bekannt, die jeweils mindestens einen Druckkopf aufweisen, vergleiche DE 195 08 180 A2.
Die Sendungen werden anliegend an einer Kulisse und eingeklemmt zwischen einem Transportband und einem Deckband hochkant an den Druckstationen vorbeigeführt.
Über Sicherheitsmaßnahmen ist nichts ausgeführt.

Schließlich ist noch ein Sicherheitsschalter für abnehmbare Schutzhauben, Türen oder Klappen bekannt, siehe DE 33 12 657 C2. Der Sicherheitsschalter besteht aus einem Schaltergehäuse und einem Betätiger, der zur Erreichung einer ersten Schaltstellung - Schalter ein - in das Schaltergehäuse einführbar und zur Erreichung einer zweiten Schalterstellung - Schalter aus - aus dem Schaltergehäuse vollständig herausziebar ist. Durch den Betätiger ist ein innerhalb des Schaltergehäuses axial verschiebbares Schaltglied bewegbar.

Zweck der Erfindung ist eine Verbesserung des Bedienerschutzes.

Der Erfindung liegt die Aufgabe zugrunde, eine Frankiermaschine der eingangs genannten Art zu schaffen, mit der eine Gefährdung der Bedienperson auch bei unsachgemäßer Benutzung der Frankiermaschine verhindert wird.

Erfindungsgemäß wird diese Aufgabe gemäß dem ersten Patentanspruch gelöst. Weitere vorteilhafte Merkmale sind den Unteransprüchen entnehmbar.
Die erfinderische Gestaltung der seitlichen Abdeckung für das Transportband und des mit dieser gekoppelten Sicherheitsschalters für den Antriebsmotor des Transportbandes hat mehrere, teilweise sogar synergetische vorteilhafte Auswirkungen.
Da das Seitenwandteil nur mittels einer Schnappverbindung mit der Abdeckhaube verbunden ist, ist es reine Routine, die Schnapkräfte so zu bemessen, daß dieses Teil sich bei Normalbetrieb nicht löst aber mindestens mit der vom Andruckelement auf einen Finger übertragenen Kraft abgesprengt wird. Demzufolge kann sich eine Bedienperson auch bereits selbst befreien, wenn deren Reaktionsgeschwindigkeit größer ist als die Transportgeschwindigkeit des Transportbandes. Bereits mit dem Lösen des Seitenwandteils wird der Sicherheitsschalter betätigt beziehungsweise dessen Taste freigegeben. Infolgedessen springt der Umschalter in die andere Stellung, in der der Motor nicht nur einpolig von seiner Stromversorgung getrennt sondern in der die Wicklung des Motors für den Transportbandantrieb kurzgeschlossen wird. In diesem Moment ist der Motor als Generator geschaltet, dessen Gegeninduktionsspannung den Bremsvorgang wesentlich verkürzt.
Der bogenförmige Ausschnitt im Seitenwandteil führt zwangsläufig dazu, daß der eingeklemmte Finger in einen Bereich gerät, in dem das günstigste Kräfte-Übersetzungsverhältnis zu Lösung des Seitenwandteils besteht.

Die Erfindung wird nachstehend am Ausführungsbeispiel näher erläutert.
Es zeigen:
- Fig. 1: eine perspektivische Ansicht einer erfindungsgemäßen Frankiermaschine mit Schutzvorrichtung, teilweise im Detail,
- Fig. 2: eine Explosivdarstellung der seitlichen Abdeckhaube für das Transportband im Auslaufbereich,
- Fig. 3: eine schematische Darstellung der elektromechanischen Schutzvorrichtung.

Zur Vereinfachung und zum leichteren Verständnis ist die Darstellung teilweise schematisiert ausgeführt.

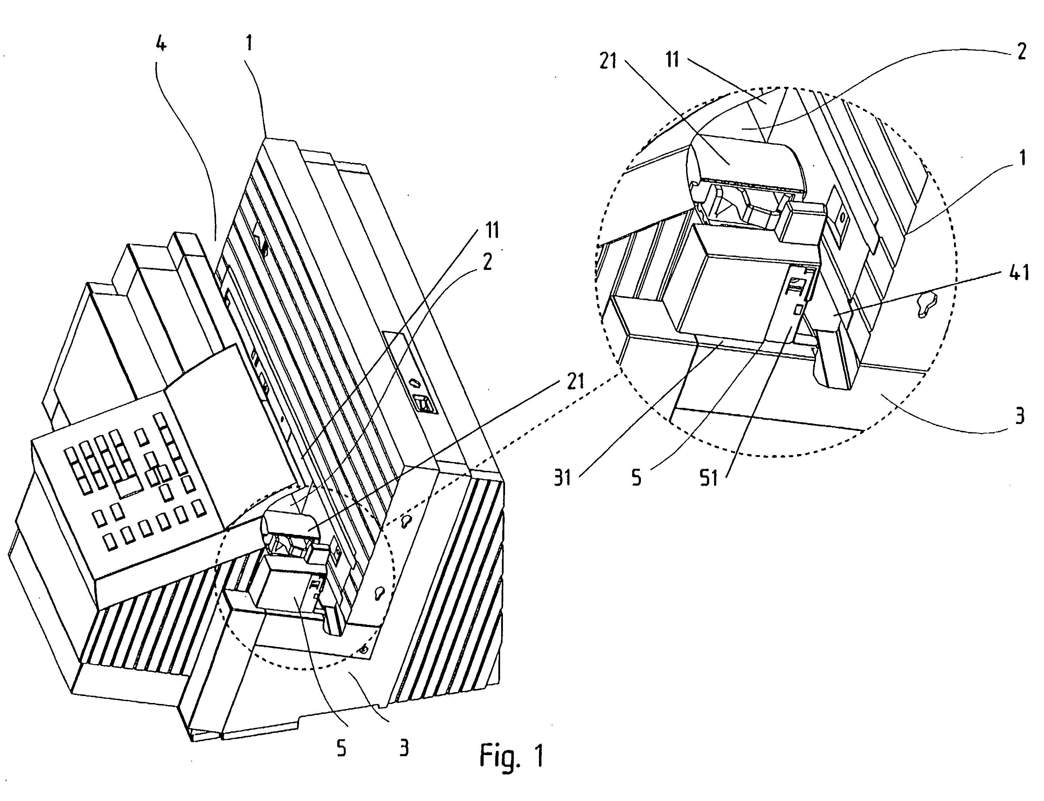

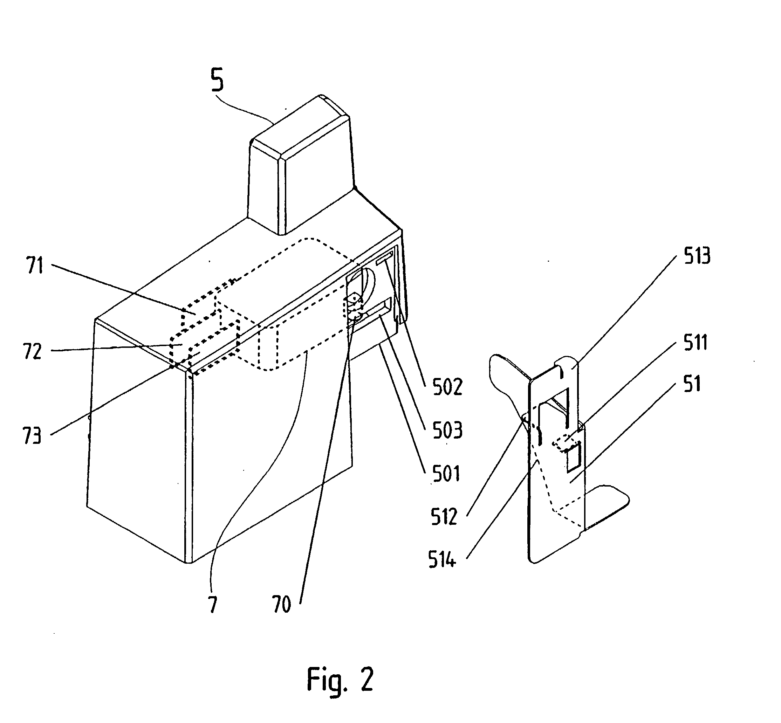

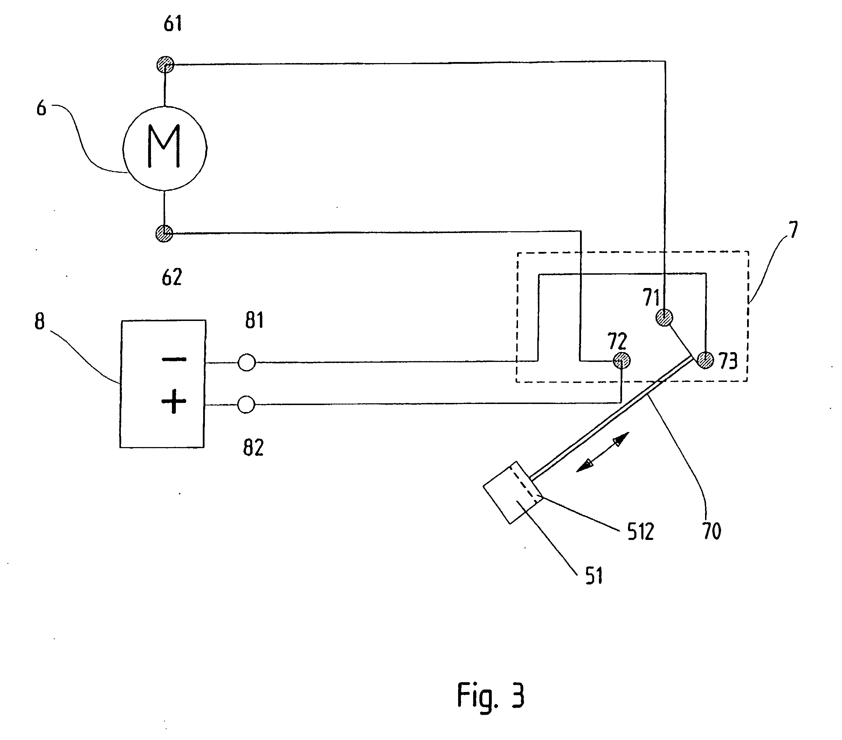

Gemäß Fig. 1 weist die Frankiermaschine auf:
- eine Führungsplatte 1,
- ein umlaufendes Transportband 2 mit darauf befestigten Andruckelementen 21,
- im Auslaufbereich der Briefe eine Seitenwand 3 sowie
- eine seitliche Abdeckhaube 5 für das Transportband 2 in dessen Umlaufbereich.
Die Briefe werden in der Frankiermaschine innerhalb eines Führungsspalts 4 entlanggleitend an der Führungsplatte 1 befördert. Dabei werden die Briefe mittels der Andruckelemente 21 gegen die Führungsplatte 1 gedrückt und mitgenommen. Die vordere Begrenzung des Führungsspalts 4 wird gemeinsam durch den vorderen Gehäuseteil der Frankiermaschine und eine nicht dargestellte Plexiglasplatte gebildet. Die Plexiglasplatte ragt dabei ungefähr so weit nach oben wie die Führungsplatte 1, so daß eine Bedienperson von oben her nicht in das Brieftransportlaufwerk greifen kann.
Die Abdeckhaube 5 ist auf den vorderen Teil 31 der Seitenwand 3 aufgesetzt und bildet hier mit der Führungsplatte 1 den auslaufenden Teil 41 des Führungsspalts 4. Von dieser Seite her ist ein Eingriff in den Bereich zwischen zwei Andruckelementen 21 möglich.
Die Abdeckhaube 5 weist ein Seitenwandteil 51 auf, das mit dem übrigen Teil derselben kraft- und formschlüssig so verbunden ist, daß dieses bei eingestecktem Finger durch die Transportkraft des Andruckelements 21 zwangsweise herausgedrückt wird.
Gemäß Fig. 2 ist das Seitenwandteil 51 an der Abdeckhaube 5 mittels einer Schnappverbindung lösbar befestigt. Zu diesem Zweck ist das Seitenwandteil 51 mit einem Schnapphaken 511 und einer Anschlagnase 513 am oberen Ende versehen. Entsprechend sind in der Abdeckhaube 5 eine zugeordnete Kante 501 und ein Schlitz 502 vorgesehen. Die Anschlagnase 513 ragt in den Schlitz 502 hinein und der Schnapphaken 511 umfaßt die Kante 502 und zieht dabei die Anschlagnase gegen die untere Kante des Schlitzes 502. Auf diese Weise wird eine lösbare Schnappverbindung gebildet.
Auf Grund der bogenförmigen Ausnehmung beziehungsweise Führungsschräge 514 wird der Finger zwangsweise in eine Postion gebracht, in der das günstigste Kräfte-Übersetzungsverhältnis zur Lösung des Seitenwandteils 51 besteht.
Zwischen Anschlagnase 513 und Schnapphaken 511 ist ein Lappen 512 angeformt der durch eine zugeordnete Öffnung 503 der Abdeckhaube 5 ragt. In der Abdeckhaube 5 ist ein als Umschalter ausgeführter Sicherheitsschalter 7 so befestigt, daß dessen Taste 70 hinter der Öffnung 503 liegt. Das eingeschnappte Seitenwandteil 51 drückt mit dem Lappen 512 gegen die Taste 70, so daß der Motorstromkreis des Motors 6 für den Antrieb des Transportbandes 2 geschlossen ist, siehe auch Fig.3.

Gemäß Fig. 3 ist der Sicherheitsschalter 7 als Umschalter ausgeführt, dessen Taste 70 mechanisch mit dem Seitenwandteil 51 über den Lappen 512 gekoppelt ist.
Die Taste 70 ist wiederum mechanisch mit dem Umschaltkontakt 71 des Sicherheitsschalters 7 gekoppelt. Der Sicherheitsschalter 7 hat außerdem einen ersten Anschlußkontakt 72 und einen zweiten Anschlußkontakt 73.
Der Motor 6 für den Antrieb des Transportbandes hat zwei Anschlüsse 61, 62 und wird von einer elektronisch geregelten Stromversorgung 8 mit Stromimpulsen gespeist. Der erste Motoranschluß 61 ist mit dem Umschaltkontakt 71 zusammengeschaltet. Der zweite Motoranschluß 62 ist mit dem ersten Anschlußkontakt 72 und dem Pluspol 82 der Stromversorgung 8 zusammengeschaltet. Der zweite Anschlußkontakt 73 ist mit dem Minuspol 81 der Stromversorgung 8 zusammengeschaltet.
Bei eingeschnapptem Seitenwandteil 51 ist die Taste 70 durch den Lappen 512 gedrückt. Infolgedessen ist der Umschaltkontakt 71 mit dem zweiten Anschlußkontakt 73 verbunden und damit der Minuspol 81 zum ersten Motoranschluß 61 durchgeschaltet. Der Motorstromkreis ist geschlossen.
Bei ausgeschnapptem Seitenwandteil 51 ist der Lappen 512 von der Taste 70 gelöst, so daß diese zurückspringt und der Umschaltkontakt 71 mit dem ersten Anschlußkontakt 72 verbunden ist. Damit ist der Stromzweig zum Minuspol 81 unterbrochen, beide Motoranschlüsse 61, 62 sind mit dem Pluspol 82 verbunden beziehungsweise die Motorwicklung ist kurzgeschlossen und es wirkt nur noch die Gegeninduktion auf Grund der Restbewegung des Transportbandes beziehungsweise des Motors, die den Bremsvorgung verstärkt.

### Verwendete Bezugszeichen

- 1: Führungsplatte
- 11: Druckfenster in der Führungsplatte

- 2: Transportband
- 21: Andruckelement auf dem Transportband 2

- 3: Seitenwand im Auslaufbereich
- 31: vorderer Teil der Seitenwand 3

- 4: Führungsspalt
- 41: seitlicher Auslaufbereich des Führungsspaltes

- 5: seitliche Abdeckhaube für das Transportband 2 im Auslaufbereich
- 501: Kante für Schnapphaken 511
- 502: Schlitz für Anschlagnase 513
- 503: Öffnung für Lappen 512
- 51: lösbares Seitenwandteil der Abdeckhaube 5
- 511: Schnapphaken am Seitenwandteil 51
- 512: Lappen am Seitenwandteil 51
- 513: Anschlagnase am Seitenwansteil 51
- 514: bogenförmige Führungsschräge am Seitenwandteil 51

- 6: Motor für Antrieb des Transportbandes
- 61: erster Motoranschluß
- 62: zweiter Motoranschluß

- 7: Sicherheitsschalter für Motor 6
- 70: Taste des Sicherheitsschalters 7
- 71: Umschaltkontakt des Sicherheitsschalters 7
- 72: erster Anschlußkontakt des Sicherheitsschalters 7
- 73: zweiter Anschlußkontakt des Sicherheitsschalters 7

- 8: Stromversorgung, elektronisch geregelt
- 81: Minuspol der Stromversorgung
- 82: Pluspol der Stromversorgung

## Patentansprüche

1. Frankiermaschine mit Brieftransportlaufwerk und Schutzvorrichtung, insbesondere zum Schutz der Bedienperson bei Eingriff in das Brieftransportlaufwerk, mit dem die Briefe in einem Führungsspalt der Frankiermaschine auf einer Kante stehend transportiert werden, wobei
- das Brieftransportlaufwerk aus einem umlaufenden Transportband (2) und auf diesem befestigten Andruckelementen (21) besteht,
- die Frankiermaschine seitlich um das Transportband (2) angeordnete Abdeckhauben aufweist,
- die Frankiermaschine eine Führungsplatte (1) aufweist, in der ein Druckfenster vorgesehen ist, in dem ein Tintendruckkopf fest installiert ist und an der die Briefe anliegen,
- in der seitlichen Abdeckhaube (5) ein Sicherheitsschalter (7) für den Motor (6) für den Antrieb des Transportbandes (2) angeordnet ist, und
- die seitliche Abdeckhaube (5) im Auslaufbereich des Führungsspaltes (4) ein Seitenwandteil (51) aufweist, welches mit dem übrigen Teil der Abdeckhaube (5) kraft- und formschlüssig sowie mit dem Sicherheitsschalter (7) kraftschlüssig verbunden sowie mit Fingerkraft in Transportrichtung lösbar ist.

2. Frankiermaschine nach Anspruch 1, **dadurch gekennzeichnet, daß** das Seitenwandteil (51) mittels einer Schnappverbindung an der Abdeckhaube (5) befestigt ist und hierbei mittels eines angeformten Lappens (512) gegen eine Taste (70) des als Druckschalter ausgeführten Sicherheitsschalters (7) drückt und
daß das Seitenwandteil (51) mit einer bogenförmigen Führungsschräge (514) zur zwangsweisen Fingerführung versehen ist.

3. Frankiermaschine nach Anspruch 2, **dadurch gekennzeichnet,**
**daß** der Sicherheitsschalter (7) als Umschalter ausgebildet ist,
dessen Umschaltkontakt (71) elektrisch mit einem ersten Motoranschluß (61) und mechanisch kraftschlüssig mit der Taste (70) verbunden ist,
dessen erster Anschlußkontakt (72) mit dem zweiten Motoranschluß (62) und dem Pluspol (82) einer elektronisch gesteuerten Stromversorgung (8) verbunden ist, und
dessen zweiter Anschlußkontakt (73) mit dem Minuspol (81) der Stromversorgung (8) verbunden ist.

4. Frankiermaschine nach Anspruch 3, **dadurch gekennzeichnet, daß** der Umschaltkontakt (71) bei gedrückter Taste (70) mit dem zweiten Anschlußkontakt (73) und bei freigegebener Taste (70) mit dem ersten Anschlußkontakt (72) beziehungsweise dem zweiten Motoranschluß (62) verbunden ist und somit den Motor (6) kurzschließt.

## Claims

1. A franking machine with letter transport drive and safety device, in particular for protecting the operator when touching the letter transport drive in which letters are transported standing on one edge in a guiding slot of the franking machine, wherein
- the letter transport drive comprises a revolving conveyor belt (2) and pressure elements (21) arranged on it;
- the franking machine has covers arranged laterally around the conveyor belt (2);
- the franking machine has a guide plate (1) having a print window in which an ink print head is firmly installed and on which the letters lie tightly;
- a safety switch (7) for the motor (6) and for the drive of the conveyor belt (2) is arranged in the lateral cover (5); and
- the lateral cover (5), in the exit area of the guiding slot (4), has a lateral wall part (51) that is connected non-positively and positively with the other part of cover (5) and non-positively with the safety switch (7) and can be loosened in transport direction by finger force

2. A franking machine according to claim 1, **characterized in that** the lateral wall part (51) is fixed to the cover (5) by means of a snap connection, pressing by means of a tab (512) formed on it against a button (70) of the safety switch (7) designed as a push button; and that the lateral wall part (51) is provided with an arch-shaped guide slope (514) as a forced finger-guide.

3. A franking machine according to claim 2, **characterized in that** the safety switch (7) is designed as a changeover switch,
the changeover contact (71) of which is connected electrically with a first motor connection (61) and mechanically non-positively with button (70);
the first contact (72) of which is connected to the second motor connection (62) and the positive pole (82) of an electronically controlled power supply (8); and
the second contact (73) of which is connected to the negative pole (81) of the power supply (8).

4. A franking machine according to claim 3, **characterized in that**, when button (70) is pushed, the changeover contact (71) is connected with the second contact (73) and, when the button (70) is released, with the first contact (72) or the second motor connection (62) and that way short-circuits the motor (6).

## Revendications

1. Machine à affranchir avec mécanisme d'entraînement des lettres et dispositif de protection, en particulier destiné à la protection de l'utilisateur au moment d'intervenir au niveau du mécanisme d'entraînement, avec lequel les lettres sont transportées en position verticale, posées sur une tranche, via une fente de guidage aménagée dans la machine à affranchir, c.à.d.
- le mécanisme d'entraînement des lettres se compose d'une bande transporteuse circulante (2) sur laquelle sont fixés des éléments presseurs (21),
- la machine à affranchir dispose de capots fixés latéralement tout autour de la bande transporteuse (2),
- la machine à affranchir dispose d'une plaque de guidage (1), dans laquelle une fenêtre d'impression est aménagée, dans laquelle est installé de manière fixe une tête d'encre et contre laquelle les lettres sont appuyées,
- dans le capot latéral (5) est disposé un interrupteur de sécurité (7) pour le moteur (6) servant à l'entraînement de la bande transporteuse (2) et
- le capot latéral (5), à la sortie de la fente de guidage (4), dispose d'une paroi latérale (51) qui, d'une part, est reliée à l'autre partie du capot (5) par un blocage de force, et qui d'autre part est reliée par force à l'interrupteur de sécurité (7), pouvant être débloquée, à la force du doigt, dans le sens du transport.

2. La machine à affranchir se distingue, suivant revendication 1, par le fait, que la paroi latérale (51) est fixée au capot (5) au moyen d'un assemblage à encliquetage et qu'elle pousse, au moyen d'une languette (512) solidaire, contre une touche (70) de l'interrupteur de sécurité (7) réalisé sous forme d'un interrupteur à poussoir et que la paroi latérale (51) est pourvue d'une inclinaison de guidage en arc (514) pour le guidage forcé du doigt.

3. La machine à affranchir se distingue, suivant revendication 2, par le fait, que l'interrupteur de sécurité (7) est réalisé sous forme d'un commutateur inverseur, dont le contact d'inversion (71) est relié électriquement à un premier branchement moteur (61) et mécaniquement par friction à la touche (70),
dont le premier contact de raccordement (72) est relié au deuxième branchement moteur (62) et au pôle positif (82) d'une alimentation en courant commandée par électronique (8), et
dont le deuxième contact de raccordement (73) est relié au pôle négatif (81) de l'alimentation en courant (8).

4. La machine à affranchir se distingue, suivant revendication 3, par le fait, que le contact d'inversion (71) est relié, la touche (70) étant appuyée, au deuxième contact de raccordement (73) et, la touche (70) étant libérée, au premier contact de raccordement (72) ou au deuxième branchement moteur (62) et qu'il court-circuite ainsi le moteur (6).
